# EUROPEAN PATENT APPLICATION

(11) **EP 3 805 103 A1**
(43) Date of publication of application: **14.04.2021**
(21) Application number: 19810267.5
(22) Date of filing: 29.05.2019
(51) Int. Cl.: B64D 11/02, A47K 4/00, E04H 1/12

(54) **FLOOR STRUCTURE FOR AIRCRAFT LAVATORY COMPARTMENT UNIT**

(30) Priority: 31.05.2018 JP 2018105422
(71) Applicant: The Yokohama Rubber Co., Ltd., Tokyo 105-8685 (JP)
(72) Inventor: MURAYAMA, Hiroshi, Hiratsuka-shi, Kanagawa 254-8601 (JP)
(74) Representative: Dilg, Haeusler, Schindelmann Patentanwaltsgesellschaft mbH
(86) International application number: PCT/JP2019/021358
(87) International publication number: WO 2019/230827

(57) **Abstract**

Provided is a floor structure for an aircraft lavatory unit in which the floor is less likely to get wet and which is advantageous in maintaining a hygienically and aesthetically preferable state of the floor. A storage recess portion (30) is formed in a section on the inner side of side plates (2606A, 2606B) on an upper surface (2602E) of a bottom plate (2602) of a floor pan (24A) so as to extend linearly along a sink-side edge (2602B). A plurality of water guiding grooves (32) communicating with a storage recess portion (30) with a spacing from each other are provided substantially in an entire region of the upper surface (2602E) of the bottom plate (2602). A water-absorbent member (28) is disposed so as to be stored in the storage recess portion (30).

## Description

### Technical Field

The present invention relates to a floor structure for an aircraft lavatory unit.

### Background Art

The aircraft lavatory unit includes a structural frame which has a bottom wall, a front wall rising from the bottom wall, a rear wall, and a pair of side walls, and of which the inside is a lavatory.

In addition, a toilet bowl is disposed in a section of the bottom wall near the rear wall in the lavatory, and a sink is disposed along one side wall.

The sink includes a counter table, a washbowl provided on an upper surface of the counter table, a faucet, and the like.

The lower part of the counter tail serves as a lower storage portion, and the upper part serves as the upper storage portion.

In addition, a floor pan is disposed in a section of the bottom wall on a front side of the toilet bowl close to the front wall and a lateral side of the lower storage portion close to the other side wall, and the floor pan forms the floor of the lavatory.

In recent years, a phenomenon that the floor of the lavatory gets wet due to the use of a toilet bowl or a sink occurs frequently depending on an air route.

### Citation List

### Patent Document

Patent Document 1: WO 2014/141701

### Summary of Invention

### Technical Problem

When the floor is wet, it is not preferable hygienically and aesthetically. Therefore, a cabin crew needs to frequently wipe out the water on the floor using a paper towel or the like, and some improvement is required.

The present invention has been devised in view of the above circumstances, and an object of the present invention is to provide a floor structure for an aircraft lavatory unit in which the floor is likely to get wet and which is advantageous in maintaining a hygienically and aesthetically preferable state of the floor.

### Solution to Problem

In order to attain the object, the present invention provides a floor structure for an aircraft lavatory unit, including a floor pan disposed on a bottom wall of a structural frame of the aircraft lavatory unit, the floor pan including a bottom plate that forms a floor of a lavatory, the floor structure including: a storage recess portion formed so as to extend along an edge of the bottom plate; an elongated water absorbing member stored in the storage recess portion; and a plurality of water guiding grooves formed in a upper surface of the bottom plate so as to communicate with the storage recess portion.

In the present invention, the structural frame may have a plurality of wall plates rising from the bottom wall, a toilet bowl may be disposed on the bottom wall near an intermediate portion in a width direction of one wall plate of the plurality of wall plates, and a sink may be disposed in another wall plate of the plurality of wall plates, and the edge of the bottom plate along which the storage recess portion extends may be a toilet bowl-side edge in which the toilet bowl is located above the intermediate portion in the extension direction or a sink-side edge extending along an extension direction of the sink on a lower side of the sink.

In the present invention, the structural frame may have a plurality of wall plates rising from the bottom wall, a sink may be disposed in one wall plate of the plurality of wall plates, a lower storage portion opened or closed by a storage door may be disposed on a lower side of the sink, a lower portion of the lower storage portion may be positioned in a section separated above a upper surface of the bottom plate, the edge of the bottom plate along which the storage recess portion extends may be a sink-side edge extending along an extension direction of the lower storage portion on a lower side of the lower portion of the lower storage portion, and the storage recess portion may be provided on a lower side of the lower portion of the lower storage portion.

In the present invention, a blindfold plate may be provided so as to be detachably attached to an end surface of the bottom plate facing the storage recess portion on a lower side of the lower portion of the lower storage portion, and the blindfold plate may rise from the end surface of the bottom plate in a state in which the blindfold plate is connected to the end surface of the bottom plate.

In the present invention, a bottom surface of the water guiding groove may be formed as an inclined surface in which a depth of the water guiding groove increases gradually as it approaches the storage recess portion.

In the present invention, the water absorbing member may contain an antibacterial agent or a fragrance agent.

### Advantageous Effects of Invention

According to the present invention, since a greater part of the water scattering on the upper surface of the bottom plate of the floor pan is absorbed by the water absorbing member through the water guiding groove, the amount of the water remaining on the upper surface of the bottom plate of the floor pan is small, and the water evaporates from the upper surface of the bottom plate in a short time.

Therefore, even if the upper surface of the bottom plate gets wet with water scattering thereon due to hand washing or the like, since the wet state disappears in a short time, it is advantageous in maintaining the lavatory in a hygienically and aesthetically preferable state. In addition, the frequency of a cabin crew needing to wipe out the water on the floor of the lavatory using a paper towel or the like is reduced, and it is advantageous in simplifying the cleaning operation.

In addition, since the section where the storage recess portion and the water absorbing member are provided is the edge of the bottom plate, the storage recess portion and the water absorbing member do not interfere with a user entering the lavatory. Thus, it is advantageous for the user to move in the lavatory 14 without obstruction and is also advantageous in maintaining the aesthetic appearance of the lavatory.

In addition, according to the present invention, since the section where the storage recess portion and the water absorbing member are provided in a section near the section of the bottom plate where the scattering water falls frequently, water absorption by the water absorbing member through the water guiding groove is efficiently realized, which is advantageous in evaporating water from the upper surface of the bottom plate in a short time.

In addition, according to the present invention, it is advantageous in enhancing the aesthetic appearance of the lavatory since the storage recess portion and the water absorbing member are positioned in the section that is not easily visible from the user of the lavatory.

In addition, according to the present invention, it is more advantageous in enhancing the aesthetic appearance of the lavatory since the water absorbing member is concealed by the blindfold plate.

In addition, according to the present invention, when the bottom surface of the water guiding groove is formed as an inclined surface, it is advantageous in allowing the water scattering on the upper surface of the bottom plate to be smoothly guided to the storage recess portion.

In addition, according to the present invention, when the water absorbing member contains an antibacterial agent or a fragrance agent, it is advantageous in suppressing the odor and ensuring the hygiene of the lavatory.

### Brief Description of Drawings

FIG. 1 is a perspective view illustrating a state in which one side wall and a door are omitted from an aircraft lavatory unit according to a first embodiment.
FIG. 2 is a perspective view of a floor pan according to the first embodiment.
FIG. 3 is a cross-sectional view illustrating a state in which a floor pan is mounted on a bottom wall on a lateral side of a lower storage portion.
FIGS. 4(A) to 4(C) are explanatory diagrams of cross-sectional shapes of a water guiding groove.
FIG. 5 is an explanatory diagram of a different shape of the water guiding groove.
FIG. 6(A) is an explanatory diagram of a different shape of the water guiding groove, and FIG. 6(B) is a cross-sectional view of main parts of FIG. 6(A).
FIG. 7 is an explanatory diagram in which a bottom surface of the water guiding groove is formed as an inclined surface.
FIG. 8 is an explanatory diagram of a case in which a storage recess portion and a water absorbing member are provided along an edge of a floor pan close to a toilet bowl.
FIG. 9 is a cross-sectional view illustrating a state in which a lid is attached to the storage recess portion.
FIG. 10 is a perspective view of the lid.
FIG. 11 is a perspective view illustrating a state in which one side wall and a door are omitted from an aircraft lavatory unit according to a second embodiment.
FIG. 12 is a perspective view of a floor pan according to the second embodiment.
FIG. 13 is a cross-sectional view illustrating a relationship among a bottom portion of a lower storage portion, a storage recess portion, and a water absorbing member.
FIG. 14 is an explanatory diagram of the third embodiment and a cross-sectional view illustrating a state in which a blindfold plate is provided.
FIG. 15 is a perspective view of the blindfold plate.

### Description of Embodiments

Next, an embodiment of the present invention will be described with reference to the drawings.

### First Embodiment

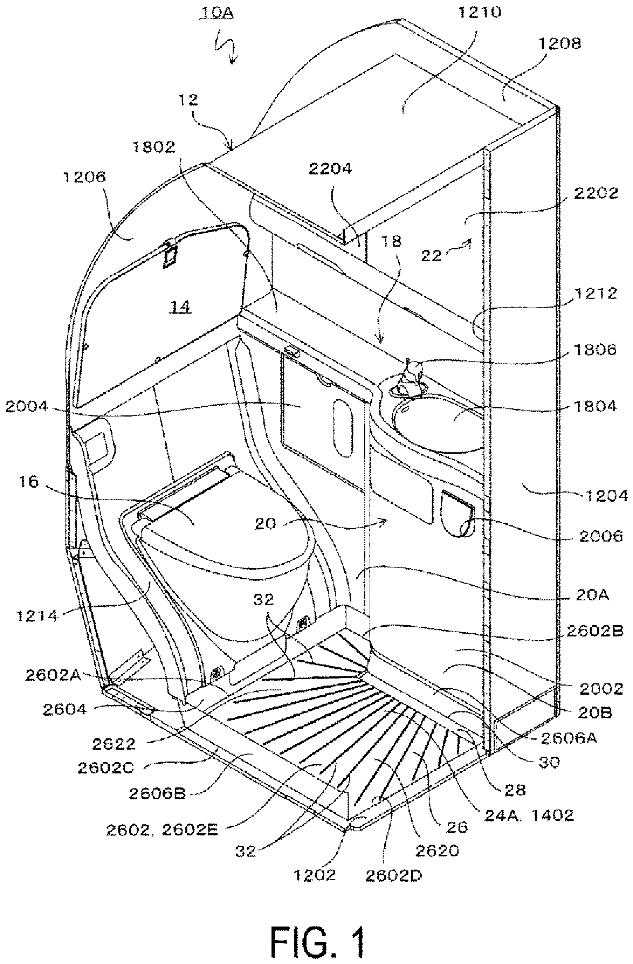

As illustrated in FIG. 1, the aircraft lavatory unit 10A includes a structural frame 12 which has a bottom wall 1202, a plurality of wall plates rising from the bottom wall 1202, and a ceiling 1210, and of which the inside is a lavatory 14.

In the present embodiment, one of the plurality of wall plates is a front wall 1204, one is a rear wall 1206 facing the front wall 1204, and the remaining two are a pair of side walls 1208 that connect both sides of the rear wall 1206 and both sides of the front wall 1204, and thus, four wall plates are provided.

In the present embodiment, an entrance 1212 is provided in the front wall 1204, an inner wall 1214 is provided in front of the rear wall 1204, and a toilet bowl 16 is provided on the floor plate 1202 through the inner wall 1210.

Further, a sink 18 is provided on one side wall 1208.

Note that there may be a case in which the sink 18 is provided on one side wall 1208 and the entrance 1212 is provided on the other side wall 1208 and a case in which the entrance 1212 is provided on one side wall 1208 and the sink 18 is provided on the front wall 1204. The layout in the lavatory 14 is not limited to the structure illustrated in FIG. 1, and the shape of the lavatory 14 in a plan view is various and the number of wall plates is not limited to four.

The sink 18 includes a counter table 1802, a washbowl 1804 provided in the counter table 1802, a faucet 1806, and the like, and the sink 18 extends along one side wall 1208 on the lateral side of the toilet bowl 16.

A lower storage portion 20 for storing a trash can device 22 with a fire extinguishing function, equipment of the lavatory 14, and the like is provided below the sink 18. The lower storage portion 20 can be opened and closed by a plurality of doors 2002, 2004, and reference sign 2006 indicates a trash input port.

An upper storage portion 24 for storing equipment of the lavatory 1002 such as tissue paper is provided above the sink 18. The upper storage portion 24 is opened and closed by a plurality of doors 2402, 2404 with mirrors.

As illustrated in FIGS. 1 to 3, a floor pan 24A is disposed in a section of the bottom wall 1202 on a front side (the side close to the front wall 1204) of the toilet bowl 16 and a lateral side (the side close to the other side wall) of the lower storage portion 20, and the floor pan 24A forms the floor 1402 of the lavatory 14.

Note that the structural frame 12 and the floor pan 24A are both made from a synthetic resin, but the floor pan 24A may be made from a lightweight, rigid metal.

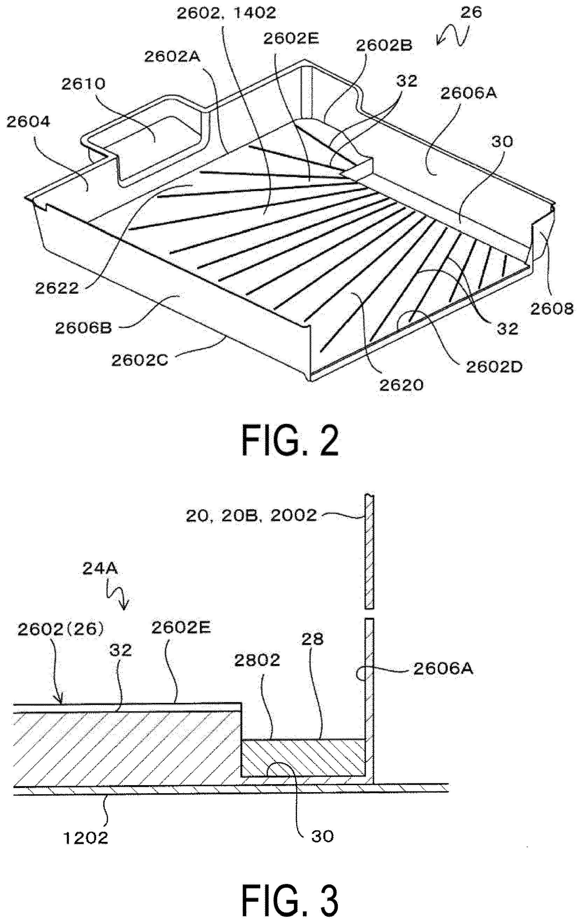

As illustrated in FIGS. 1 and 3, the floor pan 24A includes a floor pan body 26 and a water absorbing member 28.

As illustrated in FIG. 2, the floor body 26 includes a bottom plate 2602, a rear plate 2604, a pair of side plates 2606A, 2606B, and a front plate 2608, and is integrally molded with a synthetic resin, for example.

The bottom plate 2602 is mounted on the bottom wall 1202, and the upper surface 2602E of the bottom plate 2602 forms the floor 1402 of the lavatory 14 and is substantially rectangular in a plan view.

The bottom plate 2602 includes a toilet bowl-side edge 2602A located close to the sink toilet bowl 16, a sink-side edge 2602B located close to the sink 18, a side wall-side edge 2602C located close to the side wall 1208 facing the lower storage portion 20, and an entrance-side edge 2602D located close to the entrance 1212.

The rear plate 2604 rises from the toilet bowl-side edge 2602A, and a storage portion 2610 that stores a lower portion of the toilet bowl 16 is provided in the center portion in the extension direction of the rear plate 2604.

One side plate 2606A of the pair of side plates 2606A, 2606B rises from the sink-side edge 2602B, and the other side plate 2606B rises from the side wall-side edge 2602C.

Although the front plate 2608 rises from the entrance-side edge 2602D, a greater part of the front plate 2608 is notched along the contour of the entrance 1212 of the structural frame 12, and the front plate 2608 is positioned only at an end portion in the width direction of the entrance 1212.

Note that, as illustrated in FIG. 1, a section of the counter table 1802 in which the washbowl 1804 is provided projects further into the lavatory 14 than a section of the counter table 1802 near the rear wall 1206. Correspondingly, a section 20B (the door 2002) of the lower storage portion 20 below the washbowl 1804 projects further into the lavatory 14 than a section 20A of the lower storage portion 20 near the rear wall 1206.

As a result, the sink-side edge 2602B and the side plate 2606A are formed in a shape conforming to the contour of the lower storage portion 20.

Specifically, as illustrated in FIGS. 1 and 2, when the direction in which the pair of side plates 2606A, 2606B are connected is the width direction of the floor pan body 26 and the floor pan 24A is viewed in a plan view, a small-width portion 2620 having a small dimension in the width direction is formed in a section 20B (the door 2002) of the lower storage portion 20 below the washbowl 1804, and a large-width portion 2622 having a large dimension in the width direction is formed in a section 20A closer to the rear wall 1206 than the lower storage portion 20 below the washbowl 1804.

When the floor pan 24A is viewed in a plan view, the side wall-side edge 2602C and the side plate 2606B extend linearly, and the sink-side edge 2602B and the side plate 2606A are curved in a section at the boundary between the small-width portion 2620 and the large-width portion 2622.

In addition, as illustrated in FIG. 1, the washbowl 1804 is positioned above the end portion in the width direction of the small-width portion 2620, and the toilet bowl 16 is positioned above the end portion in the longitudinal direction of the floor pan body 26 when the direction in which the toilet bowl-side edge 2602A and the entrance-side edge 2602D are connected is the longitudinal direction of the floor pan body 26.

As illustrated in FIG. 2, the storage recess portion 30 is formed on the upper surface 2602E of the bottom plate 2602 in a section on the inner side than the side plate 2606A so as to extend linearly along the sink-side edge 2602B.

Specifically, the storage recess portion 30 having a rectangular cross-section along the sink-side edge 2602B of the small-width portion 2620 is formed so as to extend linearly at a constant width and a constant depth.

Note that the cross-sectional shape of the storage recess portion 30 may be semi-circular or the like, and is not limited to a rectangular shape.

The section of the bottom plate 2602 forming the bottom portion of the storage recess portion 30 is formed as a thin portion having a smaller thickness than the other section of the bottom plate 2602.

In addition, as illustrated in FIG. 2, a plurality of water guiding grooves 32 communicating with the storage recess portion 30 with a spacing from each other are provided substantially in the entire region of the upper surface 2602E of the bottom plate 2602.

In the present embodiment, a plurality of water guiding grooves 32 are provided so as to extend linearly toward the storage recess portion 30 from the section of the upper surface near the toilet bowl-side edge 2602A, the section of the upper surface near the side wall-side edge 2602C, and the section of the upper surface near the entrance-side edge 2602D.

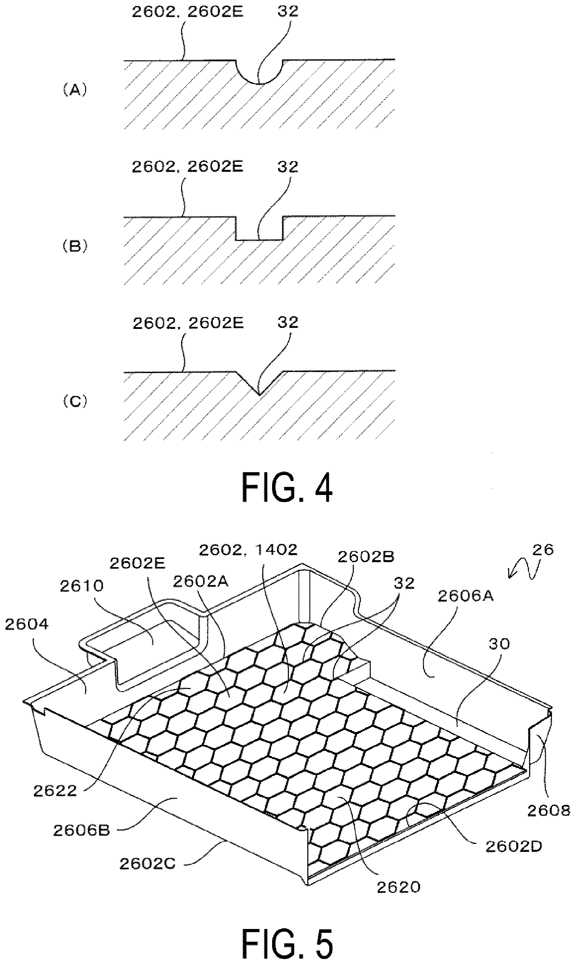

It is sufficient that the cross-sectional shape of the water guiding groove 32 have a shape that allows the water to flow smoothly into the storage recess portion 30. For example, various known groove shapes can be applied such as a semicircular cross-sectional shape as illustrated in FIG. 4(A), a rectangular cross-sectional shape as illustrated in FIG. 4(B), and a V-shaped cross-sectional shape as illustrated in FIG. 4(C).

Furthermore, the water guiding groove 32 that communicates with the storage recess portion 30 is not limited to a groove extending linearly, and various known groove shapes can be applied.

For example, as illustrated in FIG. 5, a plurality of water guiding grooves 32 extending in a curved shape or a bent shape may be provided substantially in the entire region of the upper surface 2602E of the bottom plate 2602. In this case, the plurality of water guiding grooves 32 intersect and communicate with other water guiding grooves 32 in the intermediate portion in the longitudinal direction thereof.

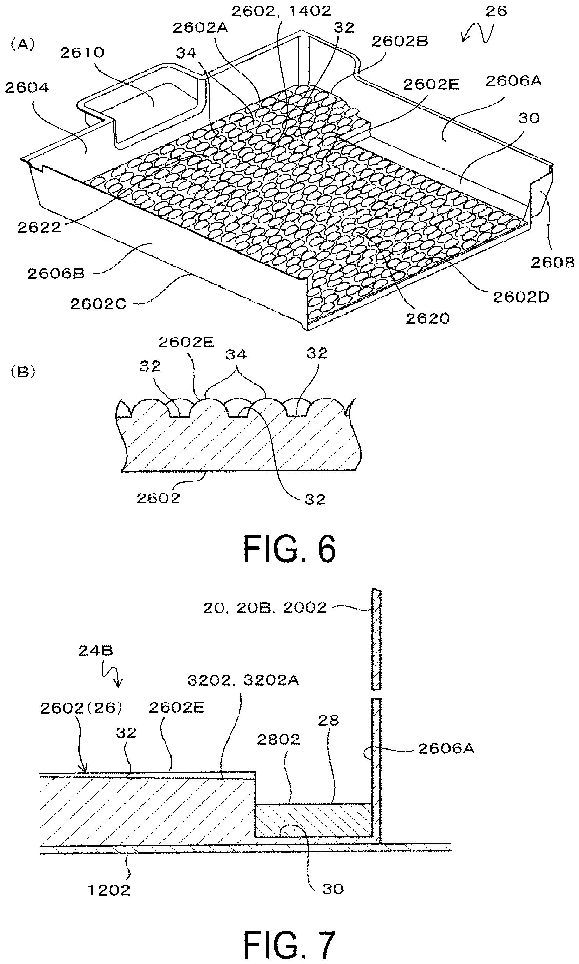

In addition, as illustrated in FIGS. 6(A) and 6(B), a plurality of projection portions 34 having a hemispherical shape, a rectangular plate shape, or a cylindrical shape may be provided in the entire region of the upper surface 2602E of the bottom plate 2602, the upper surface 2602E of the bottom plate 2602 may be formed on the surfaces of the projection portions 34, and the water guiding groove 32 may be formed between the projection portions 34. In this case, the water guiding grooves 32 communicate with the storage recess portion 30 and communicate with each other in the entire region of the upper surface 2602E of the bottom plate 2602.

Additionally, as illustrated in FIG. 7, the bottom surface 3202 of the water guiding groove 32 may be formed as an inclined surface 3202A in which the depth of the water guiding groove 32 increases gradually as it approaches the storage recess portion 30. When the bottom surface 3202 of the water guiding groove 32 is formed as such an inclined surface 3202A, it is advantageous in guiding the water scattered on the upper surface 2602E of the bottom plate 2602 smoothly in the storage recess portion 30.

The water absorbing member 28 is disposed so as to be stored in the storage recess portion 30.

As illustrated in FIG. 3, the water absorbing member 28 has a rectangular cross-section and an elongated shape so as to correspond to the cross-sectional shape of the storage recess portion 30.

In the present embodiment, the water absorbing member 28 before absorbing water has a height that is sufficiently smaller than the depth of the storage recess portion 28.

Therefore, the amount of water absorbed by the water absorbing member 28 is ensured, and the aesthetic appearance is ensured so that the upper surface 2802 of the water absorbing member 28 does not project from the upper surface 2602E of the bottom plate 2602 even if the water absorbing member 28 absorbs water and expands.

As the water absorbing member 28, for example, various known water absorbing sheets having water absorbing properties such as water absorbing polymers can be used.

Additionally, when an antibacterial water absorbing sheet containing an antibacterial agent or a disinfectant water absorbing sheet containing an disinfectant is used as the water absorbing member 28, it is possible to suppress the propagation of unwanted bacteria in the absorbed water. Therefore, it is advantageous in suppressing the odor and ensuring the hygiene of the lavatory 14, and it is possible to impart a more hygienic function.

In addition, when a fragrant water absorbing sheet containing a fragrance agent used as the water absorbing member 28, it is advantageous in suppressing the odor and ensuring the hygiene of the lavatory 14, and it is possible to impart a more hygienic function.

Next, the effects of the present embodiment will be described.

When a user of the lavatory 14 washes his or her hands in the washbowl 1804 of the sink 18, water scatters on the upper surface 2602E of the bottom plate 2602 of the floor pan 24A.

Alternatively, when a user opens the lid of the toilet bowl 16 and sits on the toilet seat to add urine, or raises the toilet seat and adds urine while standing, urine spills and scatters on the upper surface 2602E of the bottom plate 2602 of the floor pan 24A.

Alternatively, when a user opens the lid of the toilet bowl 16 and washes his or her feet on the toilet seat as a cleansing act of washing a part of the body before attending a religious service, water scatters on the upper surface 2602E of the bottom plate 2602 of the floor pan 24A.

Furthermore, water and urine (hereinafter simply referred to as "water") scattering on the upper surface 2602E of the bottom plate 2602 is guided from the upper surface 2602E of the bottom plate 2602 toward the water guiding groove 32 and spreads along the water guiding groove 32 since the plurality of water guiding grooves 32 communicating with the storage recess portion 30 are provided substantially in the entire region of the upper surface 2602E of the bottom plate 2602 and the inside of the water guiding groove 32 is positioned in a lower section than the upper surface 2602E of the bottom plate 2602.

Furthermore, when the water scattering on the upper surface 2602E of the bottom plate 2602 between adjacent water guiding grooves 32 adheres to each other to form a cluster of water having a certain volume to reach the water guiding groove 32, the water is guided from the upper surface 2602E of the bottom plate 2602 toward the water guiding groove 32 and spreads along the water guiding groove 32 since the inside of the water guiding groove 32 is positioned in a lower section than the upper surface 2602E of the bottom plate 2602.

When the water spreading along the water guiding groove 32 reaches the water absorbing member 28, the water is absorbed by the water absorbing member 28.

Then, when the water in the water guiding groove 32 is absorbed by the water absorbing member 28, the water in the water guiding groove 32 sequentially flows toward the water absorbing member 28 and is absorbed by the water absorbing member 28.

Therefore, since a greater part of the water scattering on the upper surface 2602E of the bottom plate 2602 of the floor pan 24A is absorbed by the water absorbing member 28 through the water guiding groove 32, the amount of the water remaining on the upper surface 2602E of the bottom plate 2602 of the floor pan 24A is small, and the water evaporates from the upper surface 2602E of the bottom plate 2602 in a short time.

Therefore, even if the upper surface 2602E of the bottom plate 2602 gets wet with water scattering thereon due to hand washing or the like, since the wet state disappears in a short time, it is advantageous in maintaining the lavatory 14 in a hygienically and aesthetically preferable state.

In addition, the frequency of a cabin crew needing to wipe out the water on the floor 1402 of the lavatory 14 using a paper towel or the like is reduced, and it is advantageous in simplifying the cleaning operation.

In addition, when replacing the water absorbing member 28 that has absorbed water, a simple operation of grasping and removing the water absorbing member 28 from the storage recess portion 30 and inserting a new water absorbing member 28 into the storage recess portion 30 is sufficient, and it is advantageous in simplifying the maintenance operation of the lavatory 14.

In addition, since the section where the storage recess portion 30 and the water absorbing member 28 are provided is the section of the sink-side edge 2602B, the storage recess portion 30 and the water absorbing member 28 do not interfere with a user entering the lavatory 14. Thus, it is advantageous for the user to smoothly move in the lavatory 14 and is also advantageous in maintaining the aesthetic appearance of the lavatory 14.

In addition, in the present embodiment, the section where the storage recess portion 30 and the water absorbing member 28 are provided is a section of the sink-side edge 2602B that extends in the extension direction of the sink 18 along the lower side of the sink 18 and is a section near the section of the bottom plate 2602 where the water scattering from the sink 18 falls frequently.

Therefore, water absorption by the water absorbing member 28 through the water guiding groove 32 is efficiently realized, which is advantageous in evaporating water from the upper surface 2602E of the bottom plate 2602 in a short time.

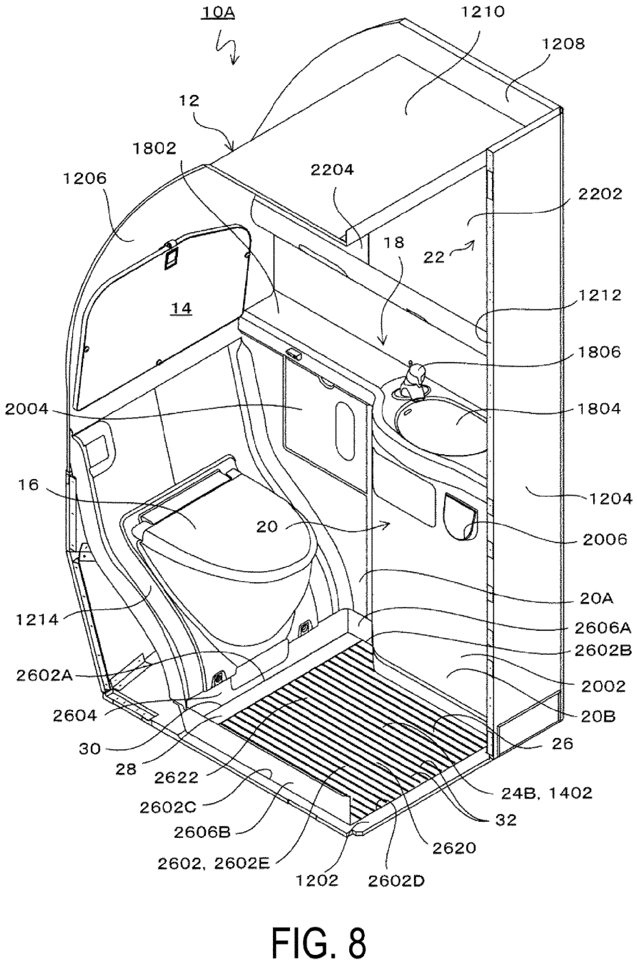

Note that in the present embodiment, a case in which the storage recess portion 30 and the water absorbing member 28 are provided along the sink-side edge 2602B has been described. However, as illustrated in FIG. 8, the storage recess portion 30 and the water absorbing member 28 may be provided along the toilet bowl-side edge 2602A, and alternatively, the storage recess portion 30 and the water absorbing member 28 may be provided along the side edges of both the sink-side edge 2602B and the toilet bowl-side edge 2602A.

When the storage recess portion 30 and the water absorbing member 28 are provided along the toilet bowl-side edge 2602A, a plurality of water guiding grooves 32 communicating with the storage recess portion 30 of the toilet bowl-side edge 2602A with a spacing from each other may be provided substantially in the entire region of the upper surface 2602E of the bottom plate 2602 of the floor pan 24B. In this case, the same effects as those of the first embodiment are obtained.

In addition, when the storage recess portion 30 and the water absorbing member 28 are provided along the side edges of both the sink-side edge 2602B and the toilet bowl-side edge 2602A, a plurality of water guiding grooves 32 communicating with the storage recess portion 30 of the sink-side edge 2602B with a spacing from each other and a plurality of water guiding grooves 32 communicating with the storage recess portion 30 of the toilet bowl-side edge 2602A with a spacing from each other may be positioned substantially in the entire region of the upper surface 2602E of the bottom plate 2602. In this case, since water absorption is performed by two water absorbing members 28, it is more advantageous in evaporating water from the upper surface 2602E of the bottom plate 2602 in a shorter time as compared to the first embodiment.

Furthermore, when the upper surface 2602E of the 2602 is made as a hydrophobic surface having hydrophobicity so that water is easily repelled, water scattering on the upper surface 2602E of the bottom plate 2602 is repelled by the hydrophobic surface of the upper surface 2602E and is easily guided to the water guiding groove 32.

Furthermore, when the surface of the water guiding groove 32 is made as a hydrophilic surface having hydrophilicity so as to easily get wet with water, the water guided from the upper surface 2602E of the bottom plate 2602 to the water guiding groove 32 easily spreads along the water guiding groove 32.

When the upper surface 2602E of the bottom plate 2602 is a hydrophobic surface and the surface of the water guiding groove 32 is a hydrophilic surface, water scattering on the upper surface 2602E of the bottom plate 2602 is efficiently absorbed by the water absorbing member 28 through the water guiding groove 32, and the amount of water remaining on the upper surface 2602E of the bottom plate 2602 of the floor pan 24A is reduced. Thus, it is more advantageous in evaporating the water from the upper surface 2602E of the bottom plate 2602 in a shorter time.

Note that in the embodiment described above, since the upper side of the storage recess portion 30 is open, it is conceivable that the water absorbing member 28 stored in the storage recess portion 30 is easily seen by users.

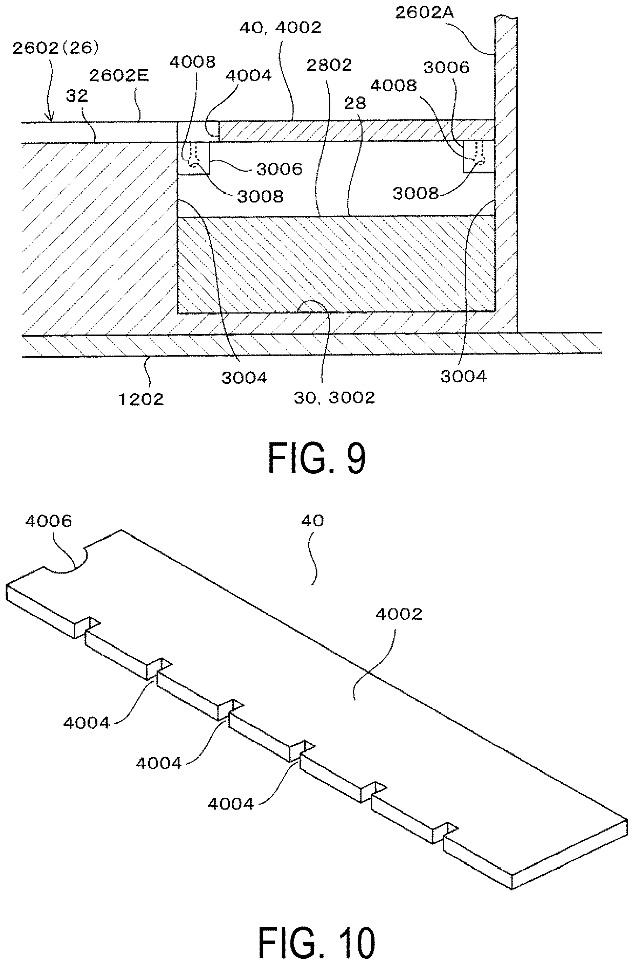

Thus, as illustrated in FIGS. 9 and 10, a lid 40 that covers the water absorbing member 28 stored in the storage recess portion 30 may be detachably provided.

As illustrated in FIG. 9, supporting walls 3006 that support the lower surface of the lid 40 are provided on the upper portion of a pair of side surfaces 3004 rising from both sides of the bottom surface 3002 of the storage recess portion 30 at intervals in the longitudinal direction of the storage recess portion 30.

Engagement holes 3008 which engagement projections 4008 of the lid 40 described later engage with or disengage from are provided in the upper surface of each supporting wall 3006.

As illustrated in FIGS. 9 and 10, the lid 40 includes a lid body 4002, a plurality of notch portions 4004, a finger hook 4006, and a plurality of engagement projections 4008.

The lid body 4002 is formed in a strip shape along the contour of the storage recess portion 30 so as to cover the entire region of the storage recess portion 30.

The plurality of notch portions 4004 are formed at intervals along the edge in the width direction of the lid body 4002.

That is, the plurality of notch portions 4004 are provided in a section where the lid body 4002 is connected to the end portions of the water guiding grooves 32 in a state of covering the storage recess portion 30, and the water guided by the water guiding groove 32 passes through the notch portions 4004 so as to be stored in the storage recess portion 30.

The finger hook 4006 is formed in one end in the longitudinal direction of the lid body 4002 so that the lid body 4002 can be operated by hooking a finger when attaching or detaching the lid 40 to and from the storage recess portion 30.

The plurality of engagement projections 4008 project downward from both sides in the width direction of the lower surface of the lid body 4002, and are provided so as to be engaged with or disengaged from the engagement holes 3008.

In addition, the water absorbing member 28 before absorbing water has a height that is sufficiently smaller than the depth of the storage recess portion 28, and a large amount of water absorbed by the water absorbing member 28 is ensured.

Attachment of the lid body 40 to the storage recess portion 30 is realized by placing the lid 40 on the supporting walls 3006 of the storage recess portion 30 and engaging the engaging projections 4008 with the engagement holes 3008.

Detachment of the lid body 40 from the storage recess portion 30 is realized by hooking a finger on the finger hook 4006 to lift the lid body 40 and disengaging the engagement projections 4008 from the engagement holes 3008.

The water absorbing member 28 can be easily replaced by removing the lid body 40 from the storage recess portion 30.

When the lid body 40 is detachably provided in the storage recess portion 30 in this manner, since the water absorbing member 28 stored in the storage recess portion 30 is concealed by the lid 40, which is advantageous in improving the aesthetic appearance of the lavatory 14.

### Second Embodiment

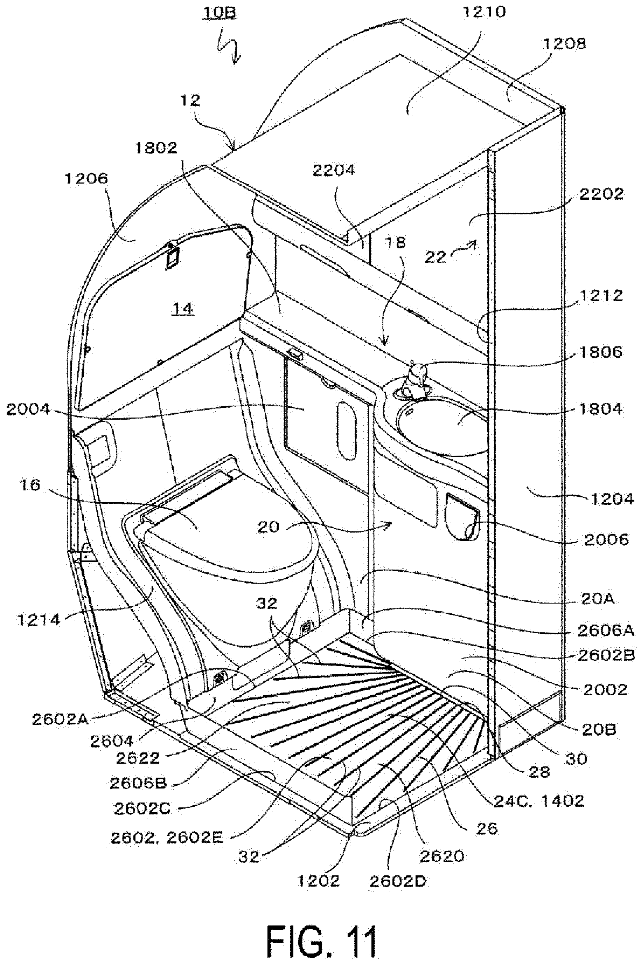

Next, a second embodiment will be described with reference to FIGS. 11 to 13.

Note that in the following description of the embodiment, the same sections and members as those in the first embodiment will be designated by the same reference signs, the description thereof will be omitted, and different sections will be mainly described.

As described above, the section of the counter table 1802 in which the washbowl 1804 is provided projects further into the lavatory 14 than the section of the counter table 1802 near the rear wall 1206. Correspondingly, the section 20B of the lower storage portion 20 below the washbowl 1804 projects further into the lavatory 14 than a section 20A of the lower storage portion 20 near the rear wall 1206.

In an aircraft lavatory unit 10B according to the second embodiment, a user can put his or her toes under the section 20B of the lower storage portion 20 below the washbowl 1804 projecting into the lavatory 14 so that the space of the narrow lavatory 14 can be used efficiently.

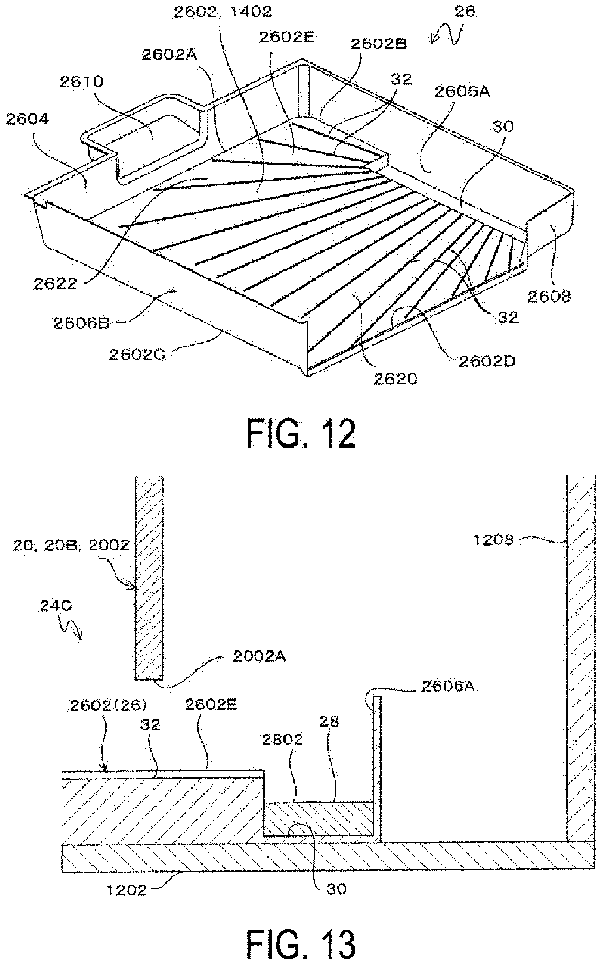

That is, as illustrated in FIG. 13, the section 20B of the lower storage portion 20 below the washbowl 1804 projecting into the lavatory 14 is positioned in a section separated above the upper surface 2602E of the bottom plate 2602 so that the toes can be inserted therein. In other words, a lower portion 2002A of the door (the storage door) 2002 is positioned in a section separated above the upper surface 2602E of the bottom plate 2602.

As illustrated in FIG. 12, the sink-side edge 2602B of the bottom plate 2602 of the floor pan 24C extends linearly from the toilet bowl-side edge 2602A to the entrance-side edge 2602D. In the section 20B of the lower storage portion 20 below the washbowl 1804 projecting into the lavatory 14, the sink-side edge 2602B is positioned in a section concealed under the section 20B of the lower storage portion 20.

The storage recess portion 30 is provided along the sink-side edge 2602B positioned in the section concealed below the section 20B of the lower storage portion 20, and the water absorbing member 28 is disposed so as to be stored in the storage recess portion 30.

Thus, as illustrated in FIG. 11, the storage recess portion 30 and the water absorbing member 28 are disposed in the section concealed below the section 20B of the lower storage portion 20 below the washbowl 1804 projecting into the lavatory 14, and are positioned in a section which is not easily visible from a user standing on the upper surface 2602E of the bottom plate 2602 of the lavatory 14.

Similarly to the first embodiment, a plurality of water guiding grooves 32 extending linearly with a spacing from each other are provided substantially in the entire region of the upper surface 2602E of the bottom plate 2602, and each communicates with the storage recess portion 30.

The second embodiment provides the same effects as those of the first embodiment and also provides an effect that it is advantageous in enhancing the aesthetic appearance of the lavatory 14 since the storage recess portion 30 and the water absorbing member 28 are positioned in the section that is not easily visible from the user of the lavatory 14.

### Third Embodiment

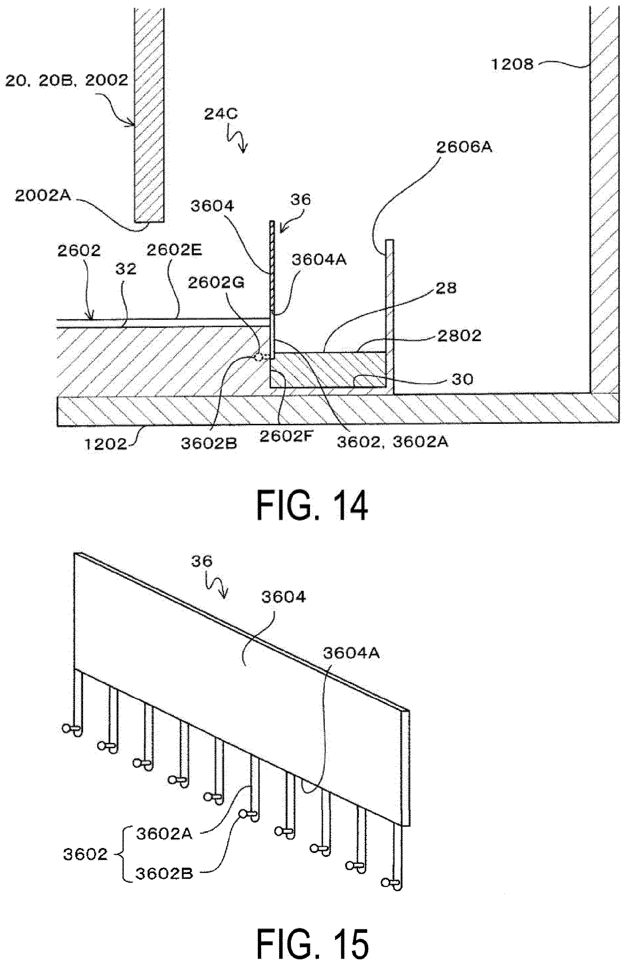

Next, a third embodiment will be described with reference to FIGS. 14 and 15.

In the third embodiment, a blindfold plate 26 for concealing the water absorbing member 28 is provided in the second embodiment.

The blindfold plate 36 includes an attachment portion 3602 and a body plate portion 3604 supported by the attachment portion 3602.

In the present embodiment, the attachment portion 3602 includes a plurality of attachment pieces 3602A and engagement projections 3602B projecting from the tips of the attachment pieces 3602A.

The engagement projections 3602B of the attachment pieces 3602A are removably connected to engagement recess portions in an end surface 2602F of the bottom plate 2602 facing the storage recess portion 30, whereby the attachment portion 3602 is attached to the end surface 2602F of the bottom plate 2602.

With the attachment portion 3602 attached to the end surface 2602F of the bottom plate 2602, the body plate portion 3604 rises orthogonally from an imaginary extension surface of the end surface 2602F of the bottom plate 2602. In this state, a lower edge 3604A of the body plate portion 3604 is positioned slightly above the upper surface 2602E of the bottom plate 2602 so that the lower edge 3604A of the body plate portion 3604 does come into contact with the water guiding groove 32.

The storage recess portion 30 in which the water absorbing member 28 is stored is formed between the side plate 2606A and the plurality of mounting pieces 3602A and the end surface 2602F of the bottom plate 2602, and the water absorbing member 28 is stored in the storage recess portion 30.

According to the third embodiment, the same effects as those of the second embodiment are obtained, and it is more advantageous in enhancing the aesthetic appearance of the lavatory 14 since the water absorbing member 28 is concealed by the blindfold plate 36.

In addition, even if the water absorbing member 28 having absorbed water is expanded and the height of the water absorbing member 28 increases, since the water absorbing member 28 is concealed by the blindfold plate 36, it is possible to use a water absorbing member 28 with a large height as compared to the first and second embodiments, and it is possible to absorb a large amount of water.

As a result, the number of replacements of the water absorbing member 28 can be decreased, which is more advantageous in simplifying the maintenance operation.

Note that the blindfold plate 36 is not limited to the structure described above, and may have an L-shaped cross-section. For example, the blindfold plate 36 may be removably attached to the side plate 2606A so that the space above the water absorbing member 28 is concealed from the lateral and upper sides of the lavatory 14.

Furthermore, in the third embodiment, a case in which the blinding plate 36 is detachably provided on the floor pan 24C has been described. However, the blindfold plate 36 may be provided on the floor pan 24C in a non-detachable manner. In this case, the door (the storage door) 2002 may be opened and the water absorbing member 28 may be replaced through the space above the storage recess portion 30.

### Reference Signs List

10A, 10B Aircraft lavatory unit
12 Structural frame
1202 Bottom wall
1206 Rear wall
1208 Side wall
14 Lavatory
1402 Floor
16 Toilet bowl
18 Sink
20 Lower storage portion
2002 Door (storage door)
24A, 24B, 24C Floor pan
2602 Bottom plate
2602A Toilet bowl-side edge
2602B Sink-side edge
2602E Upper surface
2602F End surface
28 Water-absorbing member
30 Storage recess portion
32 Water guiding groove
36 Blindfold plate

## Claims

1. A floor structure for an aircraft lavatory unit, comprising a floor pan disposed on a bottom wall of a structural frame of the aircraft lavatory unit,
the floor pan including a bottom plate that forms a floor of a lavatory, the floor structure including:
a storage recess portion formed so as to extend along an edge of the bottom plate;
an elongated water absorbing member stored in the storage recess portion; and
a plurality of water guiding grooves formed in an upper surface of the bottom plate so as to communicate with the storage recess portion.

2. The floor structure for the aircraft lavatory unit according to claim 1, wherein the structural frame has a plurality of wall plates rising from the bottom wall,
a toilet bowl is disposed on the bottom wall near an intermediate portion in a width direction of one wall plate of the plurality of wall plates, and a sink is disposed in another wall plate of the plurality of wall plates, and
the edge of the bottom plate along which the storage recess portion extends is a toilet bowl-side edge in which the toilet bowl is located above the intermediate portion in the extension direction or a sink-side edge extending along an extension direction of the sink on a lower side of the sink.

3. The floor structure for the aircraft lavatory unit according to claim 1, wherein the structural frame has a plurality of wall plates rising from the bottom wall,
a sink is disposed in one wall plate of the plurality of wall plates,
a lower storage portion opened or closed by a storage door is disposed on a lower side of the sink,
a lower portion of the lower storage portion is positioned in a section separated above a upper surface of the bottom plate,
the edge of the bottom plate along which the storage recess portion extends is a sink-side edge extending along an extension direction of the lower storage portion on a lower side of the lower portion of the lower storage portion, and
the storage recess portion is provided on a lower side of the lower portion of the lower storage portion.

4. The floor structure according to claim 3, wherein a blindfold plate is provided so as to be detachably attached to an end surface of the bottom plate facing the storage recess portion on a lower side of the lower portion of the lower storage portion, and
the blindfold plate rises from the end surface of the bottom plate in a state in which the blindfold plate is connected to the end surface of the bottom plate.

5. The floor structure for the aircraft lavatory unit according to any one of claims 1 to 4, wherein a bottom surface of the water guiding groove is formed as an inclined surface in which a depth of the water guiding groove increases gradually as it approaches the storage recess portion.

6. The floor structure for the aircraft lavatory unit according to any one of claims 1 to 5, wherein the water absorbing member contains an antibacterial agent or a fragrance agent.
